# EUROPEAN PATENT SPECIFICATION

(11) **EP 0 993 770 B1**
(45) Date of publication and mention of the grant of the patent: **12.12.2001**
(21) Application number: 99120307.6
(22) Date of filing: 12.10.1999
(51) Int. Cl.: A01K 5/00, A01K 5/02

(54) **Fodder metering device for automatically feeding animals**
Dosiereinrichtung zum automatischen Füttern von Tieren
Appareillage pour le dosage d'aliments des animaux

(30) Priority: 14.10.1998 IT MI982209
(43) Date of publication of application: 19.04.2000
(73) Proprietor: Falcon S.R.L., 23883 Brivio (LECCO) (IT)
(72) Inventor: Cogliati, Arturo, 23883 Brivio (LECCO) (IT)
(74) Representative: Cicogna, Franco

(56) References cited:
- DE-A- 3 738 156
- FR-A- 2 483 251
- SU-A- 1 107 812
- SU-A- 1 351 544
- US-A- 4 141 321
- US-A- 5 555 842

## Description

### BACKGROUND OF THE INVENTION

The present invention relates to a metering device for metering fodder for automatically feeding swines, cattle and other animals.

As is known, swines and cattle are conventionally fed by using fodder or feeding material metering devices, which instantaneously feed the fodder or feeding material as a single feeding lot.

However, new feeding methods require that the individual fodder doses are distributed not in a single lot or batch, but diluted in a time period of about 20 minutes.

This feeding system has been designed for preventing the aggressive animals being fed from disturbing other animals and from subtracting feeding materials to the other animals.

In this connection it should be pointed out that a slower consume of the fodder would allow the feeding material to be better ingested.

Systems for meeting the above mentioned requirements have been already constructed, but they are affected by some operation drawbacks.

A first problem of prior feeding systems is that the feeding material or fodder, if ground in meal form, encounters difficulties in exiting the metering device.

Another drawback of the above mentioned prior feeding systems is that the fodder or feeding material ejecting system, arranged on the bottom of the metering device, would prevent the operators from properly circulating.

Moreover, the mentioned prior devices are provided with an offset filling system for filling the metering device, which does not provide an even filling of the fodder or feeding material.

Finally, said prior devices are provided with an offset system for changing the fodder dose, which does not allow the adjusting system to be easily and perfectly driven.

### SUMMARY OF THE INVENTION

Accordingly, the aim of the present invention is to provide a fodder or feeding material metering device for automatically feeding swines, cattle and other animals, adapted to meet modern feeding requirements while obviating the above mentioned drawbacks of the existing feeding systems.

This aim, as well as yet other objects, which will become more apparent hereinafter, are achieved by the present invention which specifically relates to a fodder metering device for automatically feeding swines, cattle and other animals, said fodder metering device comprising a fodder vessel, coupled to a fodder conveyor pipe and provided with means for loading and unloading the fodder material in the inside thereof, characterized in that said fodder material loading means, arranged in said vessel, comprise a hole arranged at a central portion of a cover of said vessel and that said fodder material unloading means in said vessel comprise a gear wheel, coupled to a polygonal rod arranged inside said cover.

According to a preferred embodiment of the present invention, the metering device comprises a dose adjuster provided with a first and second dividing surfaces, said surfaces being both partially perforated, each said dividing surface being associated with movable blades adapted to be driven about a substantially vertical axis, in order to convey the fodder material in two subsequent times, through the perforated portions of said first and second surfaces, in a conveyor for unloading said fodder material in a trough.

Finally, the holes made through said first dividing surface are offset with respect to the holes formed through said second dividing surface, and the blades associated with the first dividing surface are offset with respect to the blades associated with said second dividing surface.

Moreover, at the bottom portion of the metering device cover are provided a plurality of spokes allowing the fodder material to pass therethrough, said spokes being coupled, at the central portions thereof, with a hub member provided for guiding a rod fixed to the mentioned gear wheel.

More specifically, said rod has a polygonal cross-section to allow said blades to vertically slide, while allowing the emptying operation of the metering device.

According to a further preferred embodiment of the present invention, the fodder metering device comprises a tubular rod for adjusting the volume defined by the dose adjuster, said rod being coupled to the central portion of said adjuster.

According to yet another preferred embodiment of the present invention, the polygonal rod slides inside the tubular rod to provide an easy sliding of the dose adjuster, during the adjustment operation, so as to hold the gear wheel in a perfectly aligned or set condition.

Finally, the fodder material metering device comprises a counterweight adapted to hold the top blade in contact with the dose adjuster top surface to assure a full emptying of the metering device.

### BRIEF DESCRIPTION OF THE DRAWINGS

Further advantages and characteristics of the present invention will become more apparent hereinafter from the following detailed disclosure, given by way of an illustrative but not limitative example, and with reference to the accompanying drawings, where:

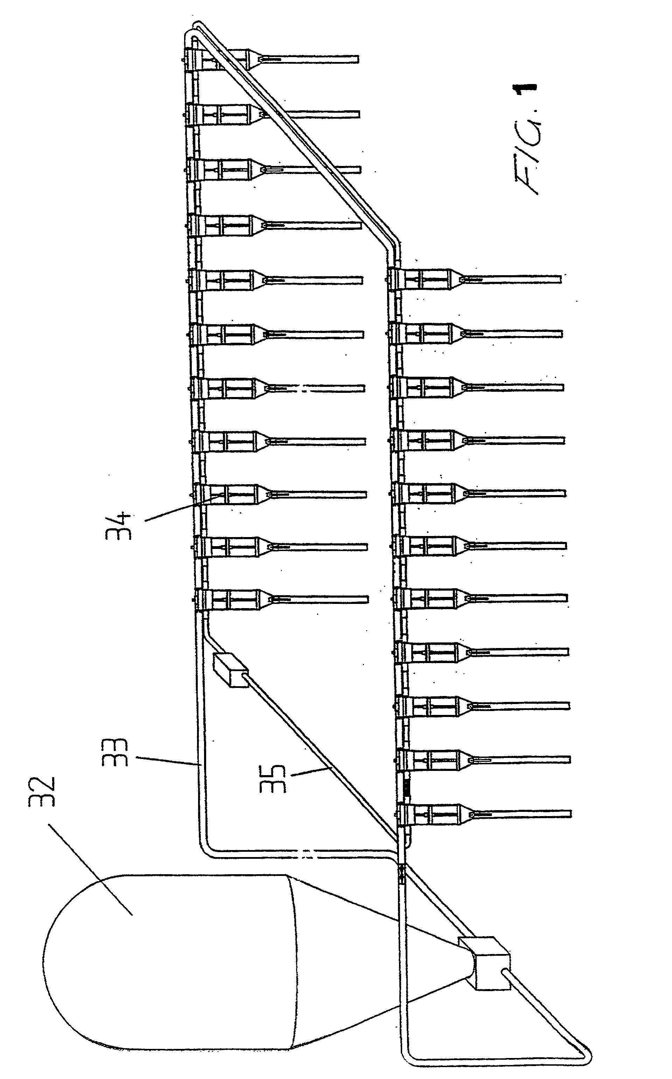

Figure 1 is a schematic view illustrating a fodder material supplying or feeding system comprising a plurality of metering devices according to the present invention;

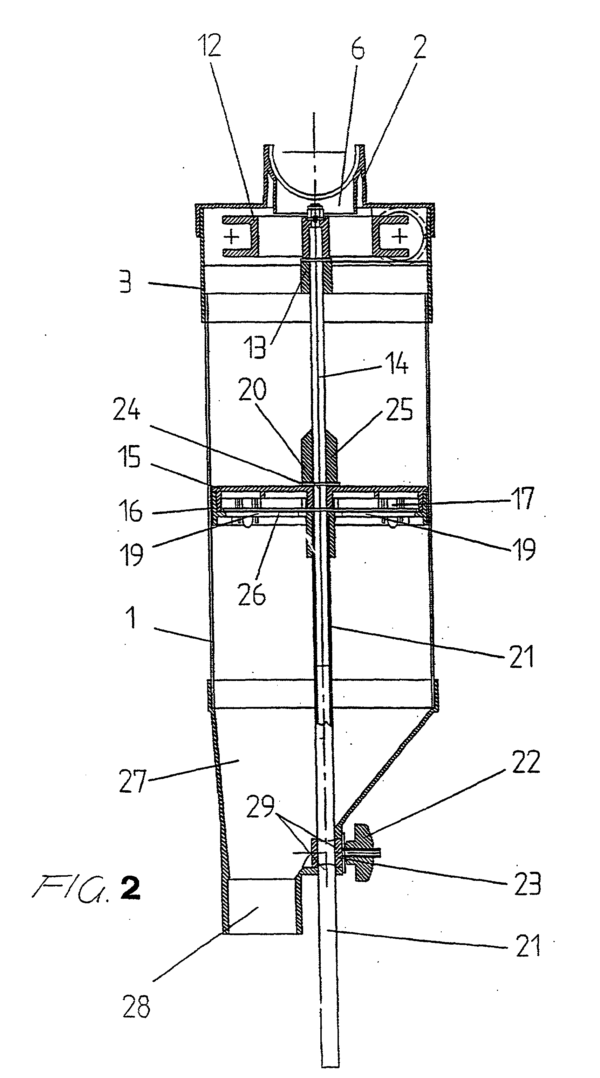

Figure 2 is a side cross-sectional view of the fodder metering device for automatically feeding swines, cattle and other animals, according to the present invention;

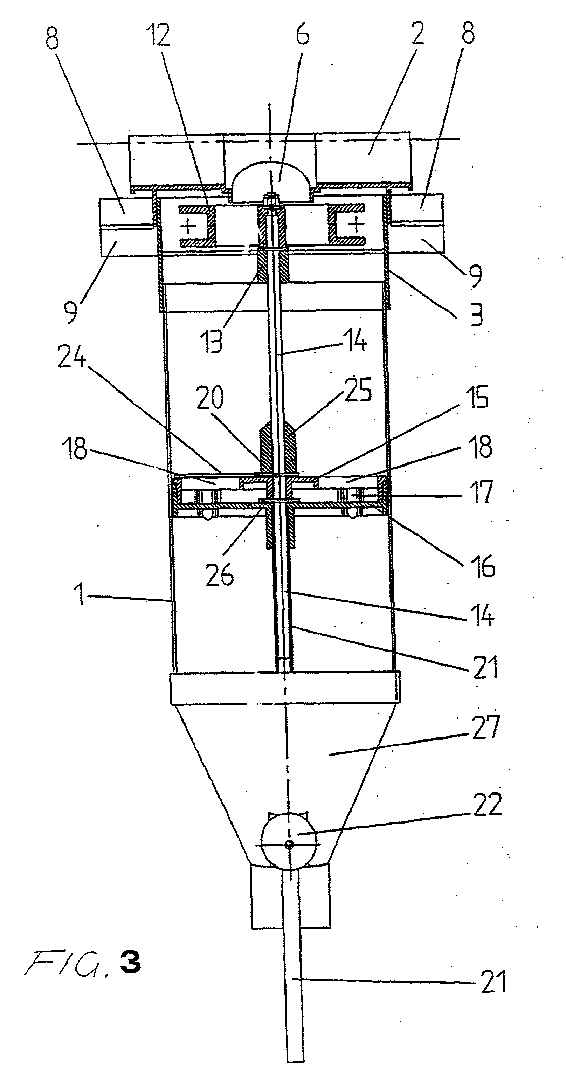

Figure 3 is a front view, as partially cross-sectioned, of the metering device shown in Figure 2;

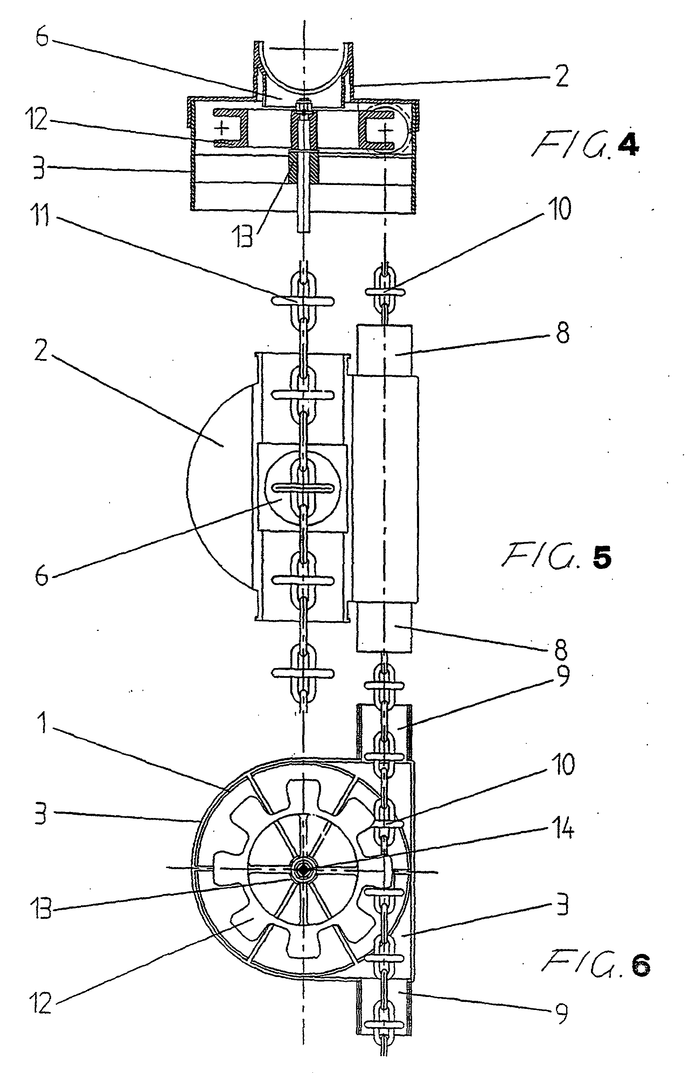

Figures 4, 5 and 6 are respectively a cross-sectional view taken substantially along a vertical plane, a side view and a cross-sectional view taken substantially along a horizontal plane of the cover and gear wheel of the metering device shown in Figures 2-3;

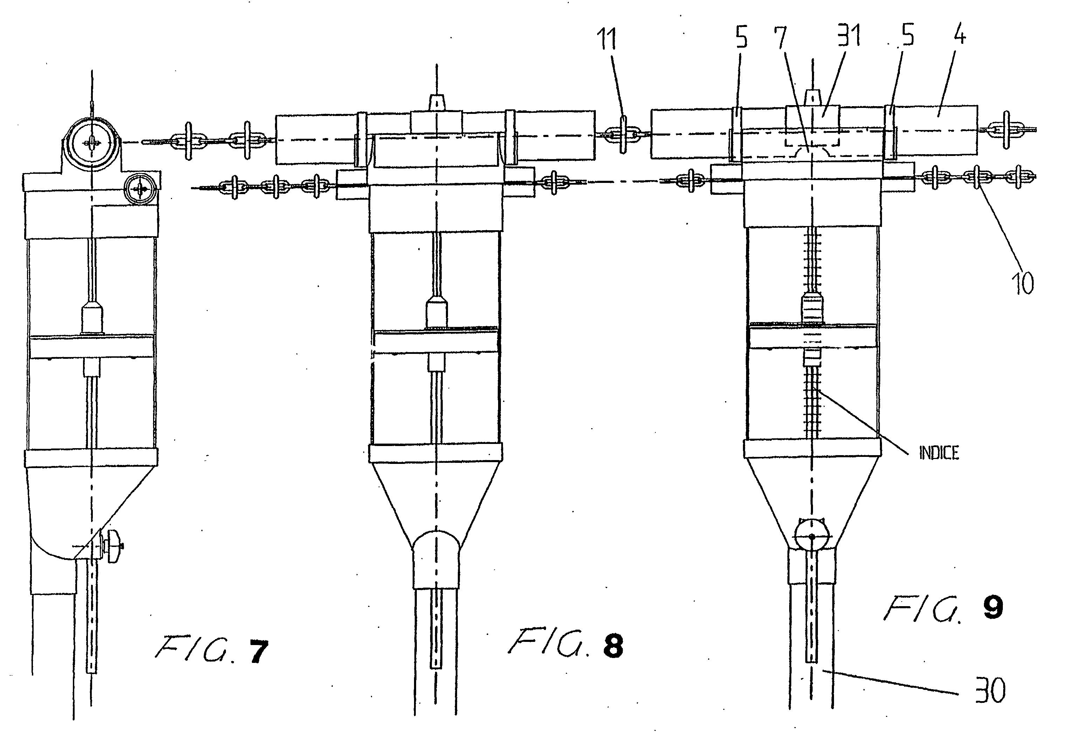

Figure 7 is a side view of the metering device according to the present invention;
Figures 8 and 9 are respective front views illustrating an assembly or set of metering devices according to the present invention, coupled to a fodder material conveyor system and to a gear wheel driving system;

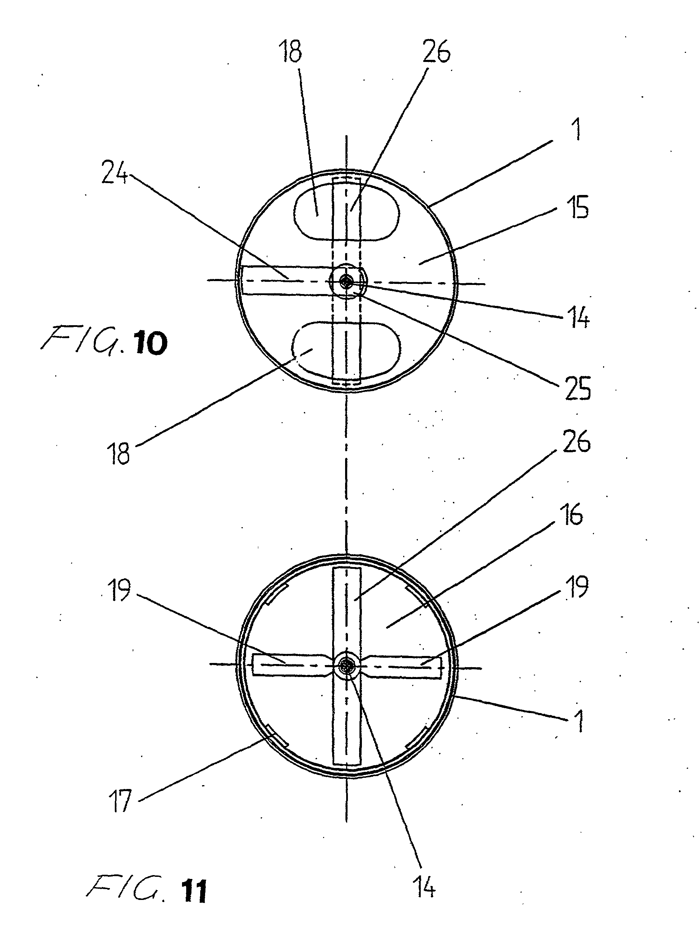

Figure 10 is a top plan view of a first portion of an adjuster included in the metering device according to the invention;

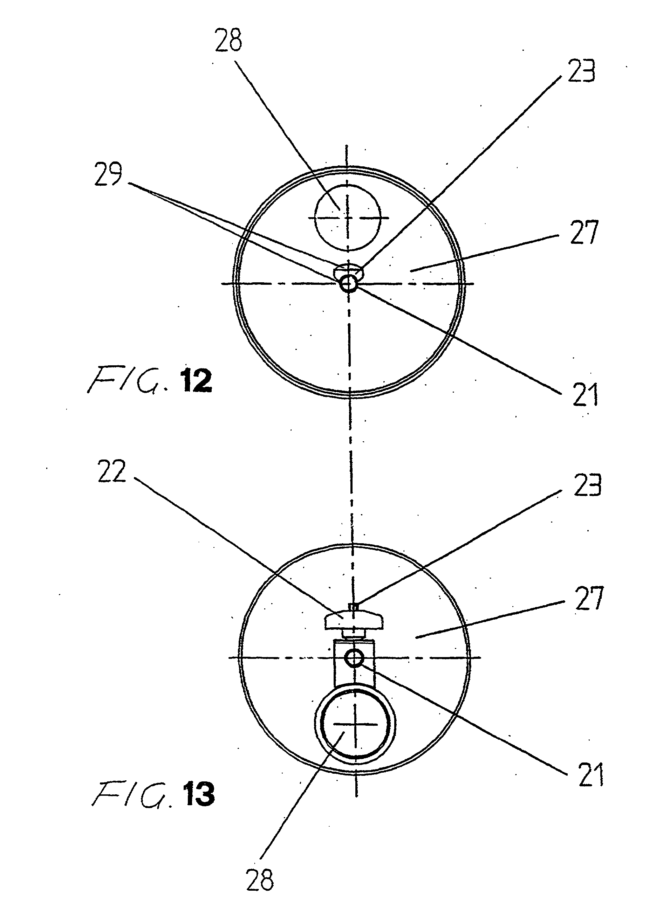

Figure 11 is a further top plan view of a second portion of the dose adjuster included in the metering device according to the present invention; and
Figures 12 and 13 are views of the bottom portion of the metering device according to the invention.

### DESCRIPTION OF THE PREFERRED EMBODIMENTS

In the following disclosure, reference will be made to some preferred embodiments of the present invention, which has been illustrated, by way of a non limitative example of several possible variations of the invention.

As shown, the fodder material metering device, for automatically feeding swines, cattle and other animals, according to the present invention, comprises a cylindric vessel 1, of any suitable size, preferably made of a transparent or clear material, and having a graduated index or scale.

Said vessel is moreover provided with a cover which is made, for constructional simplicity reasons, of two portions, respectively indicated by the reference numbers 2 and 3. The top portion 2 of the cover, in particular, is adapted to be coupled to the fodder or feeding material conveyor pipe 4 by two coupling collars or collets 5. The opening or hole 6 provided at the central portion of the top portion of the cover 2 will allow the fodder material to be fed to the metering device through the unloading or discharging hole 7 of the pipe 4.

On a side of the top portion of the cover 2 a double half-opening 8 is provided. A further mirror-like half-opening 9 is provided on the bottom portion of the cover 3, and it forms, with the first half opening, a double opening for allowing the apparatus 10 for driving the metering device to pass therethrough.

The metering device also comprises a gear wheel 12 enclosed between the two cover portions 2 and 3.

The gear wheel 12 is provided with a plurality of spokes connecting the pivot pin of said gear wheel to the toothed periphery thereof, while leaving the most portion of the inside space empty for allowing the fodder material to easily pass therethrough.

Inside the metering device is provided a polygonal (for example squared) cross-section rod 14, which is coupled to the gear wheel 12 hub for driving the bottom portion of the metering device for emptying it.

A central hub 13 is rigid with the body of the bottom cover 3 by means of spokes allowing the fodder material to easily pass therethrough. The hub 13 operates both to support the gear wheel 12 and guide the rod 14.

The metering device according to the present invention comprises moreover a fodder material dose adjuster, comprising two portions 15 and 16, due to constructional requirements.

The top portion of the fodder material dose adjuster 15 has a diameter slightly less than the inner diameter of the vessel 1. The diameter difference is so selected as to allow the dose adjuster 15 and 16 to vertically slide, while preventing the fodder material from passing through the gap between the two walls. The bottom portion 16, in turn, is coupled to the top portion 15 by a fixedjoint type of coupling 17 (or any other suitable coupling system). On the dividing surfaces of the two portions 15 and 16 of the dose adjuster, one or more openings or holes 18 and 19 (usually two openings) for allowing the fodder material to pass therethrough are provided. The openings 19 of the bottom portion 16 are arranged perpendicular with respect to the openings 18 of the top portion 15. Thus, they will be held covered by the closed surface of the top portion of the dose adjuster 15, and the fodder material will be prevented from exiting during the metering device filling operation.

A hole 20 provided at the central portion of the top portion of the dose adjuster 15 will allow the rod 14 to pass therethrough.

In this connection it should be pointed out that a tubular rod 21 is coupled to the central portion of the bottom part of the dose adjuster 16, thereby allowing the polygonal cross-sectional rod 14 to slide in its inside, in a perfectly guided manner. The tubular rod 21 is provided for changing the position of the dose adjuster 15 and 16, thereby increasing or decreasing the fodder material amount being fed.

A small wheel 22 and a pin 23 would lock the rod 21 at any desired or set positions.

A blade 24, provided with a throughgoing hole having the same section as the rod 14, is threaded on the latter, to slide therealong and so as to be driven thereby, with a rotary or reciprocating movement, for conveying the fodder material through the holes 18 of the top portion 15 of the dose adjuster.

A counterweight 25, adapted to slide along the rod 14, will hold the blade 24 in contact with the surface of the top portion of the dose adjuster, as the metering device is emptied and adjusted.

A further blade, having one or more blade elements 26, is enclosed inside the two portions 15 and 16 of the dose adjuster. Like the blade 24, it is provided with a central throughgoing hole having the same cross-section as the rod 14, to be driven thereby to slide therealong. The blade 26, in particular, will convey the fodder material from the holes 18 of the top portion of the dose adjuster 15 to the holes 19 of the bottom portion of the dose adjuster 16, thereby emptying the metering device.

A funnel like conveyor 27 is moreover provided. To the bottom 28 of said conveyor 27 a pipe 30 for conveying the fodder material to the underlaying trough is moreover applied.

Through the slanted wall of the fodder material conveyor 27 is moreover provided a double hole 29 therethrough said tubular rod 21 slides, and housing therein a locking system for locking said rod.

A pin 23, suitably perforated to be traversed by the tubular rod 21, and a small wheel, screw engaged on a threaded portion of the pin 23, press the tubular rod 21 on the wall of the hole 29 of the fodder material conveyor 27, so as to lock said tubular rod.

A gate element 31, as wound on the pipe 4, will close the fodder material inlet hole 7. Thus, it will be possible to switch off the metering devices which must not be used.

The operation of the fodder material metering device for automatically feeding swines, cattle and other animals according to the present invention is as follows.

In particular, the metering device constitutes a portion of a feeding system comprising a silo 32, holding therein a fodder reserve, as well as a fodder conveyor system 33 for conveying the fodder material from said silo or storing tank to any desired feeding place, and a plurality of metering devices 34 arranged on the fodder material conveyor pipe 33, as well as an emptying system 35.

The fodder metering device is coupled to the supplying or feeding pipe 4 by suitable coupling collars 5. The supplying pipe 4 is perforated, and the metering device 6 is so coupled that the hole 7 through the supplying pipe and the hole 6 through the metering device cover will be registered with one another. The gate element 31 arranged on the supplying or feeding pipe, at the fodder outlet hole 7, will prevent the metering device from being loaded as it cannot be used. The operation provides two operating steps, i.e. a fodder loading step and a fodder distributing or delivering step.

The fodder loading step is carried out as follows.

The fodder material, conveyed along the feeding pipe by a suitable conveying system, will fill the vessel space delimited by the dose adjusters 15 and 16 by passing through the fodder outlet hole 6 and the gear wheel 12.

The fodder amount will be set by changing the positions of the dose adjuster 15 and 16 inside the vessel 1 (the latter is made of a clear material and a graduated scale or index is arranged thereon for displaying the fodder material level and accordingly the corresponding amount) by operating the tubular rod 21. The small wheel 22 and the pin 23 will lock the rod at the desired position.

After having filled the first metering device, the outlet hole 7 provided on the pipe is closed by the fodder material continuing its movement inside the supplying or feeding pipe for filling in a like manner the subsequent metering devices. At the end of the filling of the first metering device, the conveyor system 11 is automatically stopped.

The fodder material distributing or delivering step is performed as follows.

As shown, the metering devices are coupled to one another at the side holes 8 and 9 by pipe portions and sleeves. Inside the thus formed circuit or path, a disc chain 10 or other system for rotatively or reciprocately moving the gear wheel 12 (or the lever) is provided. On the gear wheel is fixed the polygonal cross-section rod 14, driving the two blades 24 and 26 arranged on and in the dose adjuster 15 and 16. The blade 24 arranged above the dose adjuster will press the fodder material through the holes 18 in the underlaying portion where the blade 26 will unload said fodder material through the holes 19 provided in the conveyor 27 and then through the pipe 30 to the underlaying channel or trough.

The fodder material delivery or distributing time will depend on the rotary speed of the disc chain 10.

From the above disclosure it should be apparent that the invention fully achieves the intended aim and objects.

## Claims

1. A fodder metering device for automatically feeding swines, cattle and other animals, comprising a fodder material vessel, coupled to a fodder material conveyor pipe and provided with means for loading and unloading said fodder material in its inside, **characterized in that** said fodder material loading means in said vessel are provided with a hole arranged at a central portion of a cover of said vessel, and that said means for unloading said fodder material in said vessel comprise a gear wheel, coupled to a polygonal rod, arranged inside said cover.

2. A fodder metering device for automatically feeding swines, cattle and other animals, according to Claim 1, **characterized in that** said device further comprises a dose adjuster provided with a first and second dividing surfaces, both said surfaces being partially perforated, each said dividing surfaces having a plurality of associated movable blades which can be driven about a substantially vertical axis in order to convey the fodder material in two subsequent times, through the perforated portions of said first and second surfaces, in a conveyor for unloading said fodder material into a trough.

3. A fodder metering device for automatically feeding swines, cattle and other animals, according to Claim 2, **characterized in that** said holes through said dividing surface are offset with respect to said holes formed through said second dividing surface.

4. A fodder metering device for automatically feeding swines, cattle and other animals, according to Claims 2 or 3, **characterized in that** said blades associated with said dividing surface are offset with respect to said blades associated with said second dividing surface.

5. A fodder metering device for automatically feeding swines, cattle and other animals, according to one or more of the preceding claims, **characterized in that** said gear wheel is provided with gear wheel spokes allowing said fodder material to pass therethrough.

6. A fodder metering device for automatically feeding swines, cattle and other animals, according to one or more of the preceding claims, **characterized in that** said polygonal cross-section rod allows said blades to vertically slide while allowing said metering device to be emptied.

7. A fodder metering device for automatically feeding swines, cattle and other animals, according to one or more of the preceding claims, **characterized in that** said device further comprises a tubular rod for adjusting a volume defined by said dose adjuster, said tubular rod being coupled to a central portion of said adjuster.

8. A fodder metering device for automatically feeding swines, cattle and other animals, according to one or more of the preceding claims, **characterized in that** said polygonal rod slides in said tubular rod to aid the sliding of said dose adjuster, during an adjustment operation, in order to provide a perfect alignment of said gear wheel.

9. A fodder metering device for automatically feeding swines, cattle and other animals, according to one or more of the preceding claims, **characterized in that** said device comprises morover a counterweight for holding a top blade in contact with a top surface of said dose adjuster to allow a full emptying of said metering device.

10. A fodder metering device for automatically feeding swines, cattle and other animals, according to one or more of the preceding claims, and substantially as broadly dislosed and for the intended aim and objects.

## Patentansprüche

1. Dosiereinrichtung zum automatischen Füttern von Schweinen, Rindern und anderen Tieren, mit einem Futterbehälter, der mit einem Futterbeförderungsrohr verbunden und mit Mitteln zum Beladen und Entladen von Futter in dasselbe hinein versehen ist,
**dadurch gekennzeichnet, daß**
die Futterbeladungsmittel in dem Behälter mit einem Loch versehen sind, das an einem zentralen Abschnitt eines Deckels des Behälters angeordnet ist, wobei die Mittel zum Entladen des Futters in dem Behälter ein Getriebezahnrad umfassen, das mit einer auf der Innenseite des Deckels angeordneten mehreckigen Stange verbunden ist.

2. Dosiereinrichtung zum automatischen Füttern von Schweinen, Rindern und anderen Tieren nach Anspruch 1,
**dadurch gekennzeichnet, daß**
die Einrichtung weiterhin eine Dosieranpassungseinheit aufweist, die mit einer ersten und zweiten Teilungsfläche versehen ist, wobei beide Flächen teilweise perforiert sind und jede der Teilungsflächen jeweils eine Mehrzahl von dazugehörigen Laufschaufeln aufweist, die um eine im wesentlichen vertikale Achse herum antreibbar sind, um das Futter zwei aufeinanderfolgende Male durch die perforierten Abschnitte der ersten und zweiten Flächen in eine Fördervorrichtung zum Entladen des Futters in einen Trog zu befördern.

3. Dosiereinrichtung zum automatischen Füttern von Schweinen, Rindern und anderen Tieren nach Anspruch 2,
**dadurch gekennzeichnet, daß**
die durch die Teilungsfläche hindurchgehenden Löcher im Verhältnis zu den durch die zweite Teilungsfläche hindurch ausgebildeten Löchern versetzt sind.

4. Dosiereinrichtung zum automatischen Füttern von Schweinen, Rindern und anderen Tieren nach Anspruch 2 oder 3,
**dadurch gekennzeichnet, daß**
die mit der Teilungsfläche verbundenen Schaufeln im Verhältnis zu den mit der zweiten Teilungsfläche verbundenen Schaufeln versetzt sind.

5. Dosiereinrichtung zum automatischen Füttern von Schweinen, Rindern und anderen Tieren nach einem oder mehreren der vorangegangenen Ansprüche,
**dadurch gekennzeichnet, daß**
das Getriebezahnrad mit Getriebezahnradspeichen versehen ist, die ein Passieren des Futters durch sie hindurch ermöglichen.

6. Dosiereinrichtung zum automatischen Füttern von Schweinen, Rindern und anderen Tieren nach einem oder mehreren der vorangegangenen Ansprüche,
**dadurch gekennzeichnet, daß**
die Stange mit mehreckigem Querschnitt den Schaufeln ein vertikales Gleiten ermöglicht, wobei sie die Entleerung der Dosiereinrichtung ermöglicht.

7. Dosiereinrichtung zum automatischen Füttern von Schweinen, Rindern und anderen Tieren nach einem oder mehreren der vorangegangenen Ansprüche,
**dadurch gekennzeichnet, daß**
die Einrichtung weiterhin eine rohrförmige Stange zur Einstellung einer durch die Dosieranpassungseinheit definierten Menge aufweist, wobei die rohrförmige Stange mit einem zentralen Abschnitt der Anpassungseinheit verbunden ist.

8. Dosiereinrichtung zum automatischen Füttern von Schweinen, Rindern und anderen Tieren nach einem oder mehreren der vorangegangenen Ansprüche,
**dadurch gekennzeichnet, daß**
die mehreckige Stange in der rohrförmigen Stange gleitet, um das Gleiten der Dosieranpassungseinheit während eines Anpassungsvorganges zu unterstützen, um eine vollkommene Ausrichtung des Getriebezahnrades bereitzustellen.

9. Dosiereinrichtung zum automatischen Füttern von Schweinen, Rindern und anderen Tieren nach einem oder mehreren der vorangegangenen Ansprüche,
**dadurch gekennzeichnet, daß**
die Einrichtung darüber hinaus ein Gegengewicht aufweist, um eine obere Schaufel mit einer oberen Fläche der Dosieranpassungseinheit in Berührungskontakt zu halten, um eine vollständige Entleerung der Dosiereinrichtung zu ermöglichen.

10. Dosiereinrichtung zum automatischen Füttern von Schweinen, Rindern und anderen Tieren nach einem oder mehreren der vorangegangenen Ansprüche, die im wesentlichen so ausgeführt ist, wie sie allgemein offengelegt wurde, und die auf dem beabsichtigten Ziel und den Gegenständen basiert.

## Revendications

1. Dispositif pour le dosage d'aliments pour nourrir automatiquement porcs, bovins et autres animaux, comprenant un récipient destiné à recevoir le matériau alimentaire, couplé à un tuyau de transport et muni de moyens pour charger et décharger ledit matériau alimentaire à l'intérieur de celui-ci, **caractérisé en ce que** lesdits moyens de chargement du matériau alimentaire dans ledit récipient sont munis d'orifices disposés sur une partie centrale de la paroi (« cover ») dudit récipient, et ces dits moyens pour décharger ledit matériau alimentaire dans ledit récipient comprennent un engrenage, couplé à une barre polygonale, disposée à l'intérieur de ladite paroi.

2. Dispositif pour le dosage d'aliments pour nourrir automatiquement porcs, bovins et autres animaux selon la revendication 1, **caractérisé en ce que** ledit dispositif comprend en outre un ajusteur de dose muni d'une première et seconde surfaces de division, lesdites deux surfaces étant partiellement perforées, chacune desdites surfaces de division présentant plusieurs lames mobiles associées qui peuvent être dirigées autour d'un axe sensiblement vertical dans le but de transporter le matériau alimentaire à deux temps successifs, à travers les parties perforées desdites première et seconde surfaces, dans un transporteur pour décharger ledit matériau à l'intérieur d'une auge.

3. Dispositif pour le dosage d'aliments pour nourrir automatiquement porcs, bovins et autres animaux selon la revendication 2, **caractérisé en ce que** lesdits orifices situés sur la surface de division sont ajustés en respectant lesdits orifices formés sur la seconde surface de division.

4. Dispositif pour le dosage d'aliments pour nourrir automatiquement porcs, bovins et autres animaux selon la revendication 2 ou 3, **caractérisé en ce que** lesdites lames associées avec ladite surface de division sont ajustées en respectant lesdites lames associées sur ladite seconde surface de division.

5. Dispositif pour le dosage d'aliments pour nourrir automatiquement porcs, bovins et autres animaux selon l'une quelconque des revendications précédentes, **caractérisé en ce que** ledit engrenage est muni d'un engrenage à rayons (« gear wheel stokes ») permettant audit matériau alimentaire de passer à travers.

6. Dispositif pour le dosage d'aliments pour nourrir automatiquement porcs, bovins et autres animaux selon l'une quelconque des revendications précédentes, **caractérisé en ce que** ladite barre transversale permet auxdites lames de coulisser verticalement permettant audit dispositif de dosage d'être vidé.

7. Dispositif pour le dosage d'aliments pour nourrir automatiquement porcs, bovins et autres animaux selon l'une quelconque des revendications précédentes, **caractérisé en ce que** ledit dispositif comprend en outre une barre tubulaire pour ajuster un volume défini par ledit ajusteur de dose, ladite barre tubulaire étant couplée à une partie centrale dudit ajusteur.

8. Dispositif pour le dosage d'aliments pour nourrir automatiquement porcs, bovins et autres animaux selon l'une quelconque des revendications précédentes, **caractérisé en ce que** ladite barre polygonale coulisse dans ladite barre tubulaire pour assister le coulissement dudit ajusteur de dose, pendant une opération d'ajustement, dans le but de fournir un alignement parfait dudit engrenage.

9. Dispositif pour le dosage d'aliments pour nourrir automatiquement porcs, bovins et autres animaux selon l'une quelconque des revendications précédentes, **caractérisé en ce que** ledit dispositif comprend de plus un contre-poids d'équilibrage (« counterweight ») pour maintenir une lame supérieure en contact avec une surface supérieure dudit ajusteur de dose pour permettre un vidage total dudit dispositif de dosage.

10. Dispositif pour le dosage d'aliments pour nourrir automatiquement porcs, bovins et autres animaux selon l'une quelconque des revendications précédentes, sensiblement comme divulgué largement et pour les objets et but désignés.
